# EUROPÄISCHE PATENTANMELDUNG

(11) **EP 1 227 009 A2**
(43) Veröffentlichungstag der Anmeldung: **31.07.2002**
(21) Anmeldenummer: 01129601.9
(22) Anmeldetag: 12.12.2001
(51) Int. Cl.: B60R 21/01

(54) **Datenbus für Rückhaltemittel in einem Fahrzeug**

(30) Priorität: 24.01.2001 DE 10102995
(71) Anmelder: ROBERT BOSCH GMBH, 70442 Stuttgart (DE)
(72) Erfinder: Mattes, Bernhard, 74343 Sachsenstein (DE); Kazmierczak, Harald, 71717 Beilstein (DE)

(57) **Zusammenfassung**

Es wird ein Datenbus für Rückhaltemittel vorgeschlagen, der ein Steuergerät mit Rückhaltemitteln verbindet, die über Übertrager an den Datenbus angeschlossen sind. Die Daten werden dann mittels frequenzumgetaster Signale über den Datenbus übertragen. Die Rückhaltemittel sind dann jeweils in auswechselbaren Sitzen untergebracht. Bei einem Auslösefall für die Rückhaltemittel wird über eine Spannungsversorgungsleitung ein Auslösesignal an die Rückhaltemittel signalisiert.

## Beschreibung

### Stand der Technik

Die Erfindung geht aus von einem Datenbus für Rückhaltemittel in einem Fahrzeug nach der Gattung der unabhängigen Patentansprüche.

Es ist bekannt, in immer mehr Kraftfahrzeugen herausnehmbare Sitze einzusetzen. Das sind insbesondere solche Fahrzeuge, die als Van oder Sports Utility Vehicle (SUV) bzw. Offroad-Fahrzeug bekannt sind. Der Datentransfer zwischen dem Chassis und dem jeweiligen herausnehmbaren Sitz beispielsweise über Airbagdiagnose, Airbagzündung, Kindersitzerkennung und Insassenklassifizierung wird zur Zeit über flexible Kabel und Steckverbindungen durchgeführt. Darüber hinaus ist es bekannt, alternativ induktive Übertrager einzusetzen, um so die Nachteile von Steckern zu vermeiden. Dann ist die Primärseite des Übertragers mit dem Chassis verbunden und die Sekundärseite mit dem Sitz. Der Übertrager ist dabei so konzipiert, dass er im eingebauten Zustand einen maximalen magnetischen Fluß erlaubt.

### Vorteile der Erfindung

Der erfindungsgemäße Datenbus für Rückhaltemittel mit den Merkmalen des unabhängigen Patentanspruchs hat demgegenüber den Vorteil, dass nun ein Datenbus eingesetzt wird, um die Rückhaltemittel in den verschiedenen herausnehmbaren Sitzen bzw. in beweglichen Teilen für den Datentransfer miteinander zu verbinden. Damit wird eine Reduzierung der Anzahl von Leitungen erreicht, und man ist flexibler, um auf Änderungen der Anzahl der Modifikation von Rückhaltemitteln zu reagieren. Da hier induktiv übertragen wird, ist es besonders vorteilhaft, dass die digitale Übertragung mittels frequenzumgetasteter Signale (FSK = Frequency Shift Keying) verwendet wird, die leicht als Wechselspannungssignale über einen induktiven Übertrager übertragbar sind.

Durch die in den abhängigen Ansprüchen aufgeführten Maßnahmen und Weiterbildungen sind vorteilhafte Verbesserungen des im unabhängigen Patentanspruch angegebenen Datenbusses für Rückhaltemittel in einem Fahrzeug möglich.

Besonders vorteilhaft ist, dass die Daten in einem Format übertragen werden, bei dem zunächst eine Startbitfolge, dann eine Busstationskennung und schließlich das Informationsfeld zur Auswertung für die jeweilige Busstation, die durch die Busstationskennung identifiziert ist, übertragen werden. Durch die Startbitfolge wird vorteilhafterweise der Beginn des Datentelegramms erkannt. Durch die Busstationskennung kann jede Busstation passiv durch einen einfachen Vergleicher feststellen, ob das Datentelegramm für diese Busstation bestimmt ist oder nicht. Das Informationsfeld kann dabei vorteilhafterweise Aufgaben für eine jeweilige Busstation aufweisen oder wichtige Informationen enthalten, die eine weitere Busstation, beispielsweise das Steuergerät, zur Weiterverarbeitung benötigt.

Darüber hinaus ist es von Vorteil, dass das Steuergerät beim Auslösefall für die Rückhaltemittel über eine Spannungsversorungsleitung die Auslösung an die Rückhaltemittel signalisiert. Dies kann dann, da es sich hier um Rückhaltemittel handelt, die mittels Übertragern angeschlossen sind, durch einen Frequenzimpuls erreicht werden, der über die Spannungsversorgung versendet wird.

Schließlich ist es auch von Vorteil, dass die an den Datenbus angeschlossenen Busstationen Mittel zum Versenden und Empfangen der frequenzumgetasteten Signale aufweisen, wobei insbesondere dabei Phasenregelschleifen eingesetzt werden und auch Vergleicher werden durch diese Busstation verwendet, um die jeweilige Busstationskennung in den Datentelegrammen auszuwerten.

### Zeichnung

Ausführungsbeispiele der Erfindung sind in der Zeichnung dargestellt und werden in der nachfolgenden Beschreibung näher erläutert. Es zeigt
Figur 1 ein Blockschaltbild des erfindungsgemäßen Datenbusses mit angeschlossenen Busstationen,
Figur 2 einen Übertrager, der als Daten- und Energieverbindung zwischen Sitz und Chassis verwendet wird,
Figur 3 ein Datentelegramm, das über den erfindungsgemäßen Datenbus versendet wird,
Figur 4 die zwei eingesetzten FSK-Signale und
Figur 5 ein Blockschaltbild einer Phasenregelschleife.

### Beschreibung

Um eine Kommunikation mit einem herausnehmbaren Sitz, also beispielsweise dem Beifahrersitz zu realisieren, müssen Spannungen für die Energieversorgung der Elektronik und der Energiereserve für die Airbagzündung sowie eine Zündimpulsleitung zum Sitz geführt werden. Dies ist bei der Benutzung der Wickelfeder eines induktiven Übertragers erforderlich. Erfindungsgemäß wird daher bei der Verwendung mehrerer herausnehmbarer Sitze bzw. beweglicher Teile ein Datenbus zur Übertragung der notwendigen Daten verwendet.

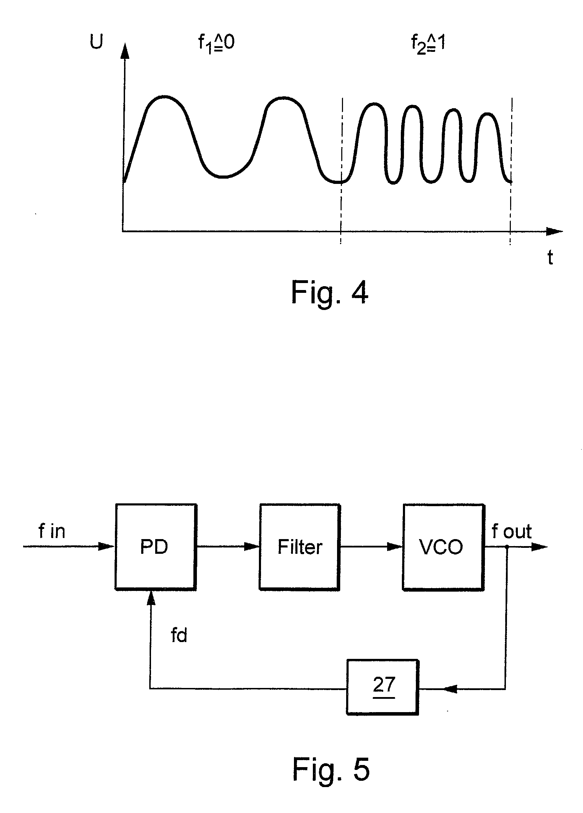

Die Frequenzumtastung bezeichnet eine digitale Frequenzmodulation, bei der zwischen zwei oder mehreren Frequenzen, die unterscheidbar sind, hin- und hergeschaltet wird. Werden nur zwei Frequenzen verwendet, ist eine Analogie zur digitalen Übertragung mit einem Bit leicht möglich. Einer Frequenz wird dann die Null zugeordnet und einer anderen Frequenz eine Eins. Dies ist in Figur 4 dargestellt. f1 repräsentiert die Null, es ist eine niedrigere Frequenz und f2 eine Eins, die hier mit einer höheren Frequenz versendet wird. Dabei werden immer gleiche Zeitabschnitte miteinander verglichen, um die Frequenzimpulse zu zählen und damit den Zustand des Bits zu identifizieren. Im Englischen wird diese Frequenzumtastung mit Frequency Shift Keying (FSK) bezeichnet.

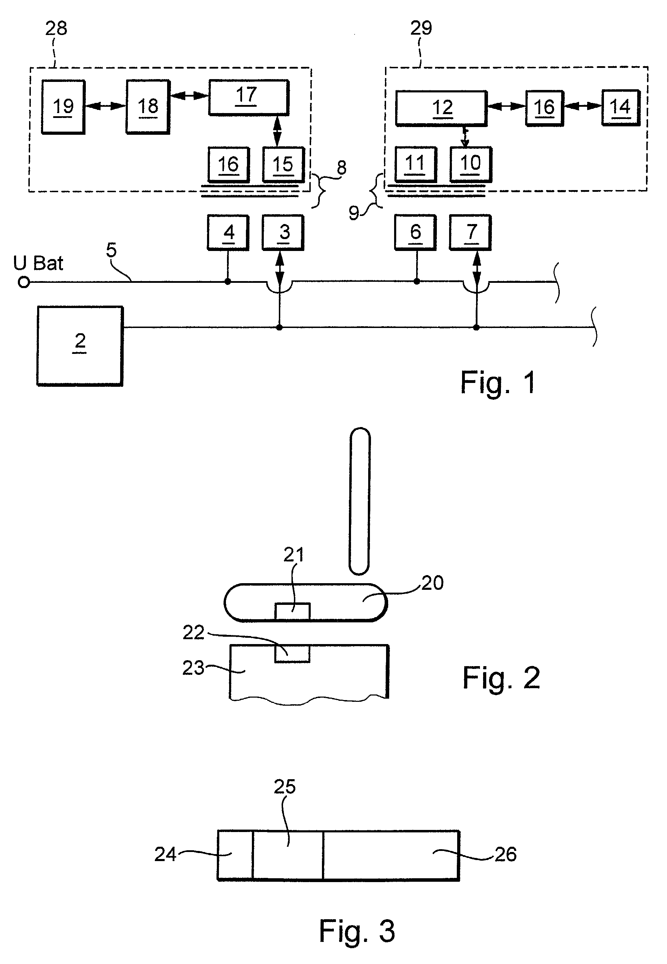

In Figur 1 ist der erfindungsgemäße Datenbus mit angeschlossenen Busstationen dargestellt. Ein Datenbus 1 verbindet über Datenein-/-ausgänge ein Steuergerät 2 für Rückhaltemittel mit Vorrichtungen für Rückhaltemittel in zwei herausnehmbaren Sitzen 28 und 29, die jeweils über Übertrager 8 und 9 mit Bustreibern 3 und 7 sowie einer Energieversorgung 4 und 6 verbunden sind. Die Bustreiber 3 und 7 an der Primärseite der Übertrager 8 und 9 sind über Datenein-/-ausgänge jeweils an den Datenbus 1 angeschlossen. Die Energieversorgungen 4 und 6 sind jeweils an eine Energieversorgungsleitung 5 angeschlossen, die vom Steuergerät 2 kommt. Das Steuergerät 2 liegt an der Batteriespannung UBat. Die Übertrager 8 und 9 sind hier durch Spulen auf der Primärseite und Sekundärseite realisiert, wobei auch zusätzlich ein Eisenkern Anwendung finden kann.

Auf der Sekundärseite des Übertragers 8 befindet sich ein Treiber 15 und eine Energieversorgung 16. Der Treiber 15 ist über einen Datenein-/-ausgang mit einem Prozessor 17 verbunden, der über einen zweiten Datenein-/-ausgang mit einer Zündkreisansteuerung 18 verbunden ist, die wiederum über ihren zweiten Datenein-/-ausgang mit Rückhaltemitteln 19 verbunden ist. Die Energieversorgung 16 versorgt die auf der Sekundärseite 28 vorhandenen Komponenten mit Energie.

Auf der Sekundärseite 29 befindet sich eine Energieversorgung 11 sowie ein Treiber 10, die am Übertrager 9 angeschlossen sind. Der Treiber 10 ist an einen Prozessor 12 angeschlossen, der über seinen zweiten Datenein-/-ausgang an eine Zündkreisansteuerung 13 angeschlossen ist, die wiederum über ihren zweiten Datenein-/-ausgang mit Rückhaltemitteln 14 verbunden ist. Die Energieversorgung 11 versorgt alle auf der Sekundärseite 29 vorhandenen Komponenten mit Energie.

Die beiden Energieversorgungseinheiten 4 und 6 übertragen die Energie zu den entsprechenden Energieversorgungseinheiten 11 und 16 auf der Sekundärseite. Der Informationsfluß über den Datenbus 1 wird von den Treibern 3 und 7 jeweils an die Treiber 15 und 10 auf der Sekundärseite weitergeleitet. Die Prozessoren 12 und 17 führen zunächst eine Erkennung durch, ob ein Datentelegramm, das über den Datenbus 1 gesendet wird, beginnt und zwar nach Figur 3 zunächst wird nach dem Startbit 24 als der Startbitfolge gesucht. Dafür weist der Prozessor 12 bzw. 17 entsprechende Mittel auf, nämlich einen Vergleicher. Wird das Startbit 24 erkannt, dann wertet der Prozessor 12 bzw. 17 ein Identifikationsfeld 25 aus, in dem die Prozessoren mit ihrer abgespeicherten Identifikation einen Vergleich mit dieser empfangenen Identifikation 25 durchführen. Ergibt sich fortlaufend bei einem Bit ein Unterschied, dann scheidet die jeweilige Busstation aus, so dass letztlich nur die Busstation übrig bleibt, die durch die Identifikation 25 identifiziert ist.

Die Busstation, für die das Feld 25 die entsprechende Identifikation angibt, wertet dann das nachfolgende Informationsfeld 26 aus. Dazu überprüft der jeweilige Prozessor 12 oder 17 den Inhalt und führt entsprechend eine Aufgabe aus, wobei er gegebenenfalls ein Datentelegramm zurücksendet, beispielsweise mit notwendigen Daten über eine Airbagdiagnose, einen Zustand der Insassenklassifizierung, eine Kindersitzabfrage oder eine Gurtschloßerkennung. Im Auslösefall sendet das Steuergerät 2 einen Frequenzimpuls über die Energieversorgungsleitung 5 zu den einzelnen Rückhaltemitteln 19 und 14, die von den Zündkreisansteuerungen 18 bzw. 13 angesteuert werden. Der Frequenzimpuls wird als Zündbefehl erkannt.

Bei den Rückhaltemitteln 14 und 19 handelt es sich hierbei um Airbags bzw. Gurtstraffer. Die Auslösung wird also über die Energieversorgungsleitung 5 über einen Frequenzimpuls übertragen, der zu einer Zündkreisansteuerung genutzt wird. Dabei werden weiterhin durch das Steuergerät 2 alle anderen Tätigkeiten unterbrochen. Über die Datenleitung 1 werden dann noch Daten gesendet, mit welcher Verzögerung gegebenenfalls gezündet wird und/oder ob das Rückhaltemittel aktiviert werden soll.

Alternativ ist es möglich, dass anstatt nur einem Startbit eine Startbitfolge verwendet wird, was die Erkennung des Anfangs eines Datentelegramms zuverlässiger gestaltet. Der Vergleicher, der zur Identifizierung verwendet wird, weist hier Komparatoren auf, um den Vergleich durchzuführen. Alternativ ist es möglich diesen Vergleich softwaremäßig durchzuführen.

In Figur 2 ist schematisch dargestellt, wie ein Übertrager einen Sitz 20 mit dem Chassis 23 verbindet. Die Primärseite 22 ist direkt gegenüber der Sekundärseite 21 angeordnet, so dass eine starke magnetische Kopplung vorliegt. Eine mechanische Verbindung existiert nicht. Damit ist insbesondere die Zuverlässigkeit dieser Verbindung und die Funktionssicherheit beim häufigen Sitzein- und -ausbau gewährleistet. Durch die kontaktlose Verbindung entfällt die Gefahr, dass das Herstellen der Steckverbindung vergessen werden kann und dass die spezifizierte Steckzyklenzahl überschritten werden kann. Die angeschlossenen Elektroniken im Chassis und im Sitz sind hier der Einfachheit halber nicht dargestellt.

Da für die Übertragung über den Datenbus 1 wird wie oben dargestellt FSK verwendet. Dabei weisen sowohl das Steuergerät 2 als auch die herausnehmbaren Sitze 28 und 29 mit ihrer Elektronik jeweils entsprechende Mittel zum Empfang und zum Versenden von FSK-modulierten Signalen auf. Ein Grundbaustein für die Frequenzumtastung ist die sogenannte Phasenregelschleife. Die Phasenregelschleife, die im Englischen als Phase Locked Loop (PLL) bekannt ist, ist in Figur 5 als Blockschaltbild dargestellt. In einen Phasendetektor PD geht über einen ersten Eingang eine Eingangsfrequenz fin hinein und auch eine zweite Eingangsfrequenz fd. Es wird hier ein Phasendifferenzsignal erzeugt, das durch den Block, der mit Filter bezeichnet ist, gefiltert wird und gegebenenfalls auch verstärkt. Dieses Signal steuert dann einen VCO (Voltage Controlled Oscillator = spannungsgeregelter Oszillator) an. Die Größe dieses Signals bestimmt also, welche Frequenz fout am Ausgang des VCO vorliegt. Diese Frequenz fout wird dann beispielsweise zum Versenden verwendet. Der Block 27 dividiert dieses Ausgangssignal mit einer festen Konstante N und heraus kommt das Signal mit der Frequenz fd. Die Eigenschaft der Phasenregelschleife ist es nun, so weit auszuregeln, dass die Differenz zwischen fin und fd verschwindet. Damit ist es möglich, auf eine feste Ausgangsfrequenz fout auszuregeln. Diese wird durch die Parameter des Blockfilters und auch des VCOs bestimmt. Alternative Möglichkeiten, eine Frequenz zu erzeugen, sind neben einem Oszillator auch ein Frequenzsynthesizer, wobei für die Demodulation jeweils Zähler verwendbar sind. Diese Mittel zum Versenden und Empfangen von FSK-Signalen sind bei den Rückhaltemitteln auf der Sekundärseite angeordnet. Sie können beispielsweise den Treibern 10 und 15 zugeordnet sein.

## Patentansprüche

1. Datenbus für Rückhaltemittel in einem Fahrzeug, **dadurch gekennzeichnet, dass** die Rückhaltemittel (14, 19) jeweils über einen Übertrager (8, 9) als Busstationen an den Datenbus (1) koppelbar sind, dass ein Steuergerät (2) für die Rückhaltemittel (14, 19) als eine Busstation an den Datenbus (1) anschließbar ist und dass Daten über den Datenbus (1) mittels frequenzumgetasteter Signale übertragbar sind.

2. Datenbus nach Anspruch 1, **dadurch gekennzeichnet, dass** eine Primärseite des jeweiligen Übertragers (8, 9) im Chassis (23) und eine Sekundärseite (21) in einem Sitz (20) vorhanden ist.

3. Datenbus nach Anspruch 1 oder 2, **dadurch gekennzeichnet, dass** die Daten ein Startbit (24), eine Busstationskennung (25) und ein Informationsfeld (26) zur Auswertung für die jeweilige Busstation aufweisen.

4. Datenbus nach einem der Ansprüche 1 bis 3, **dadurch gekennzeichnet, dass** das Steuergerät (2) bei einem Auslösefall für die Rückhaltemittel (14, 19) über eine Spannungsversorgungsleitung (5) die Auslösung an die Rückhaltemittel (14, 19) signalisiert.

5. Busstation zum Anschluß an den Datenbus (1) nach einem der Ansprüche 1 bis 4, **dadurch gekennzeichnet, dass** die Busstation Mittel zum Versenden und Empfangen der frequenzumgetasteten Signale aufweist.

6. Busstation nach Anspruch 5, **dadurch gekennzeichnet, dass** die Mittel zum Versenden und Empfangen der frequenzumgetasteten Signale wenigstens eine Phasenregelschleife aufweisen.
